# EUROPÄISCHE PATENTANMELDUNG

(11) **EP 4 086 830 A1**
(43) Veröffentlichungstag der Anmeldung: **09.11.2022**
(21) Anmeldenummer: 21020243.8
(22) Anmeldetag: 02.05.2021
(51) Int. Cl.: G06Q 10/08, G06Q 50/28

(54) **COMPUTER UNTERSTÜTZTES VERFAHREN ZUM BEDARFSGERECHTEN BEREITSTELLEN PHYSISCHER WAREN**

(71) Anmelder: FrontNow GmbH, 10117 Berlin (DE)
(72) Erfinder: Lihotzky, Bernhard, 80802 München (DE); Funk, Marc-Sebastian, 10115 Berlin (DE)
(74) Vertreter: Reich, Jochen

(57) **Zusammenfassung**

Die vorliegende Erfindung ist auf ein Verfahren gerichtet, welches es ermöglicht, dass Lagerbestände mittels einer Sensorik derart überwacht werden, dass Wareneingänge und Warenausgänge erkannt werden und sodann mittels eines Computer implementierten Verfahrens anhand von Rückschlüssen aus den erstellten Datensätzen Lager entsprechend beliefert werden können. Das vorgeschlagene Verfahren lässt sich im Wesentlichen als ein Computer implementiertes Verfahren umsetzen und minimiert nicht nur Transportkosten und Warenrückgaben, sondern schafft Händlern die Möglichkeit genau die Waren vorzuhalten, welche auch vom Kunden benötigt werden. Somit werden Rückgaben minimiert, welche typischerweise ein Neuverpacken und Aufbereiten der Retouren bedeuten. Ein weiteres Einsatzgebiet ist das Verwalten von Lagerbeständen bzw. Werkstattbeständen. Die vorliegende Erfindung ist ebenfalls auf eine entsprechend eingerichtete Systemanordnung gerichtet. Ferner wird ein Computerprogrammprodukt mit Steuerbefehlen vorgeschlagen, welche das vorgeschlagene Verfahren implementieren beziehungsweise die vorgeschlagene Vorrichtung und Anordnung betreiben.

## Beschreibung

Die vorliegende Erfindung ist auf ein Verfahren gerichtet, welches es ermöglicht, dass Lagerbestände mittels einer Sensorik derart überwacht werden, dass Wareneingänge und Warenausgänge erkannt werden und sodann mittels eines Computer implementierten Verfahrens anhand von Rückschlüssen aus den erstellten Datensätzen Lager entsprechend beliefert werden können. Das vorgeschlagene Verfahren lässt sich im Wesentlichen als ein Computer implementiertes Verfahren umsetzen und minimiert nicht nur Transportkosten und Warenrückgaben, sondern schafft Händlern die Möglichkeit genau die Waren vorzuhalten, welche auch vom Kunden benötigt werden. Somit werden Rückgaben minimiert, welche typischerweise ein Neuverpacken und Aufbereiten der Retouren bedeuten. Ein weiteres Einsatzgebiet ist das Verwalten von Lagerbeständen bzw. Werkstattbeständen. Die vorliegende Erfindung ist ebenfalls auf eine entsprechend eingerichtete Systemanordnung gerichtet. Ferner wird ein Computerprogrammprodukt mit Steuerbefehlen vorgeschlagen, welche das vorgeschlagene Verfahren implementieren beziehungsweise die vorgeschlagene Vorrichtung und Anordnung betreiben.

Aus dem Stand der Technik sind unterschiedliche Verfahren bekannt, welche dazu dienen, mittels Wareneingängen und Warenausgängen den Lagerbestand einzuschätzen. Hierzu ist es beispielsweise bekannt, einen Einkaufskorb mittels einem bildverarbeitenden Verfahren zu analysieren und somit zu erkennen, welche Waren ein Kunde in seinen Einkaufskorb gelegt hat. Darüber hinaus sind Scanner bekannt, anhand derer der Kunde, selbst oder durch einen Kassierer seine Waren einscannen lassen kann und somit wird in einem zugrunde liegendem Rechensystem eine Artikelidentifikationsnummer hinterlegt. Hierbei ist es möglich einen entsprechenden Zeitstempel mit abzuspeichern.

Weiterhin sind sogenannte Recommender-Systeme bekannt, welche ein Kaufverhalten eines Kunden analysieren und sodann basierend auf der Kaufhistorie ein weiteres Produkt vorschlagen. Diese Recommender-Systeme sind typischerweise auf einzelne Produktkategorien beschränkt. Kauft ein Kunde Sportartikel, so wird diesem Kunden ein weiterer Artikel seiner ausgeübten Sportart vorgeschlagen. Solche Recommender-Systeme sind jedoch dann nachteilig, wenn der Kunde kein spezifisches Produkt kauft, sondern eine Vielzahl nicht miteinander korrelierter Produkte. Somit ist es im Stand der Technik schwierig vorherzusehen, welches weitere Produkt dem Kunden voraussichtlich gefallen wird.

Der Nachteil im Stand der Technik liegt unter anderem darin, dass Lagerbestände bzw. Warenbestände in einem Geschäft in großem Umfang vorgehalten werden müssen. Zudem müssen auch Produkte vorgehalten werden, die der Kunde gar nicht wünscht, sondern vielmehr nur deswegen kauft, weil keine andere Alternative vorhanden ist. Somit besteht das Problem auch darin, dass der Kunde ein Produkt nicht aus Gefallen kauft, sondern vielmehr kauft der Kunde widerwillig dieses Produkt und würde jedoch lieber bei einer anderen Filiale einkaufen.

Aus dem genannten Nachteil im Stand der Technik resultiert, dass umfangreiche Lagerbestände gehalten werden müssen und zudem Rückläufe häufig sind. Oftmals erkennt der Kunde, dass er das gekaufte Produkt gar nicht haben will und bringt es zurück in die Filiale. Dies erhöht wiederum das Problem der großen Lagerbestände.

Noch ein weiterer Nachteil im Stand der Technik ist es, dass Transportwege nicht optimiert werden können, sondern vielmehr müssen nicht gewünschte Lagerbestände bzw. Produkte wiederum in eine andere Filiale bzw. ein anderes Lager gebracht werden, wo ein höherer Bedarf besteht. Durch zurückgegebene Produkte bzw. Waren verschärft sich dieses Problem.

Noch ein weiterer Nachteil im Stand der Technik ist es, dass nicht gewünschte Produkte, welche jedoch trotzdem gekauft wurden oftmals nach einer Rücknahme nicht direkt in den Handel gelangen können. Solche Produkte müssen oftmals neu verpackt werden bzw. müssen mindestens hygienisch aufbereitet werden. Zudem ist zu überprüfen, ob eventuelles Zubehör noch vorhanden ist und gegebenenfalls muss Zubehör aufgefüllt werden.

Generell akzeptiert der Kunde eine Applikation auf dem Mobilfunkgerät, die ihn beim Einkaufen unterstützt. Typischerweise akzeptiert der Kunde jedoch keine Applikationen, welche personenbezogene Daten speichert. So ist der Kunde typischerweise nur bereit ein anonymisiertes Kaufverhalten zu übermitteln, wobei jedoch sichergestellt werden muss, dass diese Datenzugriffe sicher abgespeichert werden. Um an einem entsprechenden Verfahren teilzunehmen akzeptiert der Kunde erfahrungsgemäß keinerlei technischen Aufwand, so dass eine entsprechende Datenerfassung im Hintergrund ablaufen muss.

Somit ist es ebenfalls ein Nachteil im Stand der Technik, dass dieser dem Kunden nur gegen einen höheren Aufwand einen Mehrwert bietet. Darüber hinaus bestehen oft datenschutzrechtliche Probleme und generell ist der Endverbraucher skeptisch falls er zu viele Daten bereitstellen muss.

Somit ist es eine Aufgabe der vorliegenden Erfindung ein Verfahren bereitzustellen, welches es erlaubt, dass Lagerbestände möglichst gering gehalten werden, Transportkosten optimiert werden und zudem Warenrückläufer möglichst vermieden werden. Ebenso ist eine Aufgabe der vorliegenden Erfindung eine entsprechend eingerichtete Systemanordnung vorzuschlagen. Ferner ist es eine Aufgabe ein Computerprogrammprodukt mit Steuerbefehlen bereitzustellen, welche das Verfahren implementieren beziehungsweise die vorgeschlagene Vorrichtung und Anordnung betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein Verfahren zum bedarfsgerechten Bereitstellen von physischen Waren in verteilten Lagern vorgeschlagen, aufweisend ein Erfassen von Warenidentifikationsnummern jeweils eines Konvoluts ausgehender physischer Waren in mindestens einem ersten Lager mittels einer Positionsbestimmung; ein verteiltes und redundantes Abspeichern der Warenidentifikationsnummern unter Verwendung eines Netzwerks aus verteilten Datenspeichern; ein Auslesen der abgespeicherten Warenidentifikationsnummern und ein Auslesen von Benutzerparametern von einem Server, welche dem mindestens einen ersten Lager zugeordnet sind; ein Klassifizieren der Warenidentifikationsnummern und der Benutzerparameter; und ein Bereitstellen von physischen Waren anhand der Warenidentifikationsnummern in einem zweiten Lager in Abhängigkeit der Klassifizierung und ausgelesener weiterer Benutzerparameter, welche dem zweiten Lager zugeordnet sind.

Bei dem vorgeschlagenen Verfahren handelt es sich im Wesentlichen um ein Computer implementiertes Verfahren. So wird gemäß der vorliegenden Erfindung vorgeschlagen physische Waren bereitzustellen, was jedoch derart zu verstehen ist, dass ein Veranlassen eines Bereitstellens ausreichend ist. So kann ein Bereitstellen von Waren bereits derart erfolgen, dass in einem zugrunde liegenden System angegeben wird, welche Waren bereitzustellen sind.

Bei den Lagern gemäß der vorgeschlagenen Erfindung handelt es sich beispielsweise um herkömmliche Lager, welche Produkte für Fabriken lagern. Dies kann jedoch auch eine Geschäftsstelle sein, die Endkunden eine entsprechende Produktpalette anbietet. Das Lager kann also ein Zwischenlager sein, kann aber auch die Verkaufsstelle sein, die der Endkunde aufsucht.

Bei einem Erfassen von Warenidentifikationsnummern kann es sich um eine drahtlose Übermittlung dieser Nummern an eine Sensorvorrichtung handeln. So kann dieser Schritt derart umgesetzt werden, dass an den Waren RFID Etiketten angebracht sind, die beispielsweise beim Verlassen eines Ladens eingescannt werden. Generell ist es auch möglich die Produkte optisch zu erkennen und mittels eines Bildvergleichs zu identifizieren. Hierzu sind entsprechende Vergleichsbilder in einer Datenbank hinterlegt, welche ebenso die Identifikationsnummern vorhält. Generell ist es auch möglich, dass der Endkunde die Waren mit seinem Mobiltelefon einscannt. Bei einem Konvolut von Waren kann es sich um diejenigen Produkte handeln, die beispielsweise auf einer Palette oder in einem Einkaufswagen heraus transportiert werden. Der Schritt Erfassen von Warenidentifikationsnummern wird iterativ für jeden Einkauf getätigt.

Das Verlassen der Produkte aus dem Lager wird mittels Positionsbestimmung durchgeführt. Dies kann derart erfolgen, dass an einem Ausgang eine Sensorik angebracht ist, die erkennt, dass der Kunde das Lager verlässt. Hierzu kann auch das Mobiltelefon mit einer Satellitenortung verwendet werden. Alternativ bzw. additiv ist es auch möglich eine bildverarbeitende Software einzusetzen, die erkennt, wenn der Kunde das Lager verlässt.

Ferner ist es möglich, dass sich das Mobiltelefon eines Kunden automatisch in ein mobiles Netzwerk des Lagers einwählt und sodann bei einem Abreißen der Verbindung davon ausgegangen wird, dass der Endkunde das Lager verlassen hat. So kann ein herkömmliches WLAN Netz dazu dienen, zu erkennen, ob der Kunde innerhalb der Netzausleuchtung ist oder aber ob die Verbindung abreißt. Alternativ kann auch die Stärke des Netzsignals verwendet werden, so dass eine Entfernung von dem WLAN Router geschätzt werden kann. Darüber hinaus kann mittels der vorgeschlagenen Positionsbestimmung auch erkannt werden, falls der Kunde sich der Kasse nähert. Werden mehrere WLAN Router betrieben so kann die Position mittels der Abstände, ermittelt durch die Signalstärke und/ oder Antwortzeiten, im Raum bestimmt werden.

Sind die entsprechenden Daten erfasst, so werden diese verteilt und redundant abgespeichert. Hierzu kann eine sogenannte Blockchain dienen. Erfindungsgemäß werden die Daten derart abgespeichert, dass diese segmentiert werden und somit von einem Angreifer nicht ausgelesen werden können. Die Daten werden so zerlegt und verteilt, dass nur noch Segmente vorhanden sind, die keinerlei Semantik aufweisen. Somit kann ein Angreifer selbst wenn er auf einen Datenspeicher unberechtigterweise zugreift keine Rückschlüsse auf die eigentlichen Daten ziehen.

Zum Abspeichern der Daten eignet sich ein verteiltes Netzwerk, wobei entsprechende Speichervorrichtungen vorzugsweise getrennt voneinander implementiert werden. Das Netzwerk kann als ein lokales Netzwerk ausgestaltet werden oder aber das Internet kann Verwendung finden.

Um das vorgeschlagene Verfahren weiter auszuführen werden die abgespeicherten Daten ausgelesen und weiterverarbeitet. Hierzu wird zu den abgespeicherten Warenidentifikationsnummern auch ein weiterer Server mit Benutzerparametern ausgelesen. Diese Benutzerparameter können personenbezogene Daten bereitstellen, welche jedoch typischerweise anonymisiert sind. So werden statistische Daten angeboten, welche einen Rückschluss auf eine Bevölkerungsgruppe geben, die an dem jeweiligen Standort beheimatet ist. Solche demographischen Daten können dazu verwendet werden bestimmte Personenkreise und deren Kaufverhalten zu analysieren.

So kann festgestellt werden, an welchem Standort welche Käuferschicht ansässig ist und somit kann die Produktpalette entsprechend angepasst werden. Somit sind die Benutzerparameter dem mindestens einen ersten Lager zugeordnet. Dies heißt also, dass der Ort bzw. die Adresse mit Postleitzahl eines Lagers bekannt ist. Somit kann auch evaluiert werden, welche Benutzerparameter typischerweise an diesem Ort vorherrschen.

Mit diesen Daten kann ein Klassifizieren der Warenidentifikationsnummern und der Benutzerparameter erfolgen. So können die Warenidentifikationsnummern bestimmten Benutzerparametern zugeordnet werden. Handelt es sich beispielsweise bei dem Lager um ein Zuliefererlager für Handwerksbetriebe, so kann festgestellt werden, welche Industrie in diesem Standort bevorzugt angesiedelt ist. Entsprechend kann das Klassifizieren derart erfolgen, dass aus den Daten Rückschlüsse gezogen werden, welche Bevölkerungsschicht welche Waren nachfrägt. Hierzu erfolgt ein Korrelieren der Benutzerparameter mit den Warenidentifikationsnummern. Die Benutzerparameter können auch geographische Informationen beinhalten. So kann hinterlegt werden, dass es sich beispielsweise um eine Urlaubsregion handelt. Wohnen an einem Ort beispielsweise besonders viele junge Menschen, so werden bestimmte Sportarten stärker nachgefragt. Somit kann bei einem Klassifizieren ein Ergebnis sein, dass an diesem Ort besonders junge Menschen wohnen, die ganz bestimmte Sportartikel besonders einer Sportart anfragen. Handelt es sich beispielsweise um einen Ort bzw. ein Lager in der Nähe von Skigebieten, so wird entsprechend anhand der Benutzerparameter und der Warenidentifikationsnummern identifiziert werden können, dass beispielsweise eine junge Bevölkerungsgruppe einen speziellen Ski bevorzugt.

Diese Ergebnisse lassen sich auch auf andere Lager anwenden. So erfolgt das Erfassen von Warenidentifikationsnummern beispielsweise an unterschiedlichen Orten. Es erfolgt also ein Erfassen an mindestens einem ersten Lager, wobei also eine beliebige Anzahl von Lagern bzw. Lagerstätten untersucht werden kann. Diese beliebige Anzahl lässt sich sodann auf mindestens ein zweites Lager anwenden. So ist es also erfindungsgemäß möglich, dass bei einer Neueröffnung einer Filiale bereits vorab genau beschrieben werden kann, welche Produkte die Zielgruppe nachfrägt. So können vorhandene Klassifizierungen benutzt werden und es kann die ansässige Bevölkerungsschicht evaluiert werden. Sodann wird erfindungsgemäß aus den historischen Daten errechnet, welche Produktpalette bezüglich der vorherrschenden Zielgruppe bereitgestellt werden muss.

Erfindungsgemäß ist es also somit möglich, bei einer Neueröffnung einer Filiale vorab bereits zu wissen, mit welchen Produkten diese Filiale befüllt werden muss. Dies stellt sicher, dass entsprechende Waren stets in ausreichender Anzahl vorhanden sind und Transportwege folglich minimiert werden. Somit lässt sich auch der Lagerplatz optimal nutzen, da bedarfsgerecht Waren bereitgestellt werden und es auch vermieden werden kann, dass entweder zu viel oder zu wenig Waren einer bestimmten Art vorhanden sind. Auch lassen sich anhand der Klassifizierungen historischer Daten Interessen derart errechnen, dass nicht nur der Waren Typ identifiziert wird, der nachgefragt wird, sondern vielmehr kann das konkrete Produkt bzw. die konkrete Ware identifiziert werden. Dies verhindert auch, dass eine signifikante Anzahl von Rückgaben erfolgt. Die Kunden erhalten in dem Lager genau diejenigen Waren, die sie auch erwarten und sind daher weniger dazu geneigt, die Ware im Anschluss zurückzugeben. Dies wiederum erspart ein Aufbereiten der Waren bzw. ein Neuverpacken.

Um also bedarfsgerecht physische Waren in dem zweiten Lager bereitzustellen, werden die vorhandenen Klassifizierungen genutzt und es werden Benutzerparameter, welche sich auf das zweite Lager beziehen ausgewertet. Anhand dieses Benutzerprofils kann sodann identifiziert werden, welche Waren an dem zweiten Lager nachgefragt werden.

Gemäß einem Aspekt der vorliegenden Erfindung wird die Positionsbestimmung unter Verwendung einer Signalstärke, eines bildverarbeitenden Verfahrens und/ oder eines Positionssensors durchgeführt. Dies hat den Vorteil, dass bestehende Verfahren wieder verwendet werden können, anhand derer festgestellt werden kann, ob Waren ein Lager verlassen. Die vorgeschlagenen Verfahren können hierbei auch kombiniert werden. Zudem können noch weitere Endgeräte Einsatz finden, beispielsweise ein mobiles Endgerät eines Benutzers. Hierzu können entsprechende Befehle auf dem mobilen Endgerät des Benutzers hinterlegt werden, die sich beispielsweise in ein WLAN Netz einwählen. Zudem kann erkannt werden, wo sich der jeweilige Endkunde befindet und folglich kann festgestellt werden, wann er die Kasse passiert bzw. ein Lager verlässt.

Gemäß einem weiteren Aspekt der vorliegenden Erfindung werden die Warenidentifikationsnummern unter Verwendung einer Luftschnittstelle ausgelesen. Dies hat den Vorteil, dass ein Einkaufswagen bzw. eine Palette im Vorbeigehen bzw. im Vorbeibewegen ausgelesen werden kann und somit können die Warenidentifikationsnummern ausgelesen werden. Typischerweise werden mehrere Waren gekauft und somit entsteht jeweils ein Konvolut an Waren. Die Warenidentifikationsnummern werden erfasst und stets verteilt und redundant abgespeichert. Somit entstehen Daten, die eine Historie des Warenbestands belegen.

Gemäß einem weiteren Aspekt der vorliegenden Erfindung wird das verteilte und redundante Abspeichern derart durchgeführt, dass randomisiert Datensegmente erzeugt werden. Dies hat den Vorteil, dass Datensegmente erzeugt werden, welche keinerlei Semantik, d.h. Sinngehalt enthalten. Es werden lediglich technische Datenfragmente geschaffen, die erst dann eine Information bereitstellen, wenn diese wieder zusammengesetzt werden. Somit ist es vorteilhaft eine Tabelle zu führen, die angibt, wo welche Datensegmente hinterlegt werden. Diese Datenbank kann dann ausgelesen werden und bei Bedarf werden die Datensegmente zur weiteren Verarbeitung wieder zusammengeführt.

Gemäß einem weiteren Aspekt der vorliegenden Erfindung weisen die Benutzerparameter verschlüsselte personenbezogene Daten und/ oder ortsbezogene Daten auf. Dies hat den Vorteil, dass statistische Daten vorliegen, welche die jeweiligen Benutzer beschreiben. So sind statistische Daten vorhanden, die Rückschlüsse auf eine Konfession, einen Familienstand, eine Anzahl an Kindern, eine Kfz Zulassung und/oder ein Geschlecht geben. Somit können diese statistischen Daten verwendet werden und es kann ein Profil geschaffen werden, welches angibt, welche Bevölkerungsschicht an einem bestimmten Ort ansässig ist. Zudem liegen geographische Daten vor, also ortsbezogene Daten, die Rückschlüsse darauf zulassen, welche örtlichen Gegebenheiten vorliegen.

Gemäß einem weiteren Aspekt der vorliegenden Erfindung wird das Klassifizieren ein Verwenden einer Clusteranalyse, einer Variablenauswahl, einer Proximitätsbestimmung, einer Gewichtung, einer Varianzbestimmung und/ oder eines Cluster-Verfahrens durchgeführt. Dies hat den Vorteil, dass das Klassifizieren mittels einer künstlichen Intelligenz durchgeführt werden kann und zudem ist es möglich die Waren mit der ansässigen Bevölkerungsschicht zu korrelieren. Je nach Anwendungsszenario kann das Klassifizieren eingestellt werden und die Anzahl der Klassen kann bestimmt werden. Hierzu kann man auch einzelne Faktoren gewichten. Beispielsweise kann ein Preis einer Ware gewichtet werden und es wird stärker analysiert, ob die vorhandene Käuferschicht eher hochpreisige oder niederpreisige Waren kauft. Somit können auch diese bereitgestellt werden und Lagerbestände können besser geplant werden.

Gemäß einem weiteren Aspekt der vorliegenden Erfindung wird mindestens ein Warenparameter bereitgestellt, der bei dem Klassifizieren berücksichtigt wird. Dies hat den Vorteil, dass eine Datenbank vorgehalten werden kann, welche auch die Waren beschreibt und somit kann bei einem Klassifizieren berücksichtigt werden, welche Parameter von Waren besonders gewichtet werden sollen. Zudem lassen sich mittels der Warenparameter die bereitgestellten Waren besser spezifizieren und somit eine genauere Klassifizierung erreichen.

Gemäß einem weiteren Aspekt der vorliegenden Erfindung werden die bereitgestellten physischen Waren derart ausgewählt, dass die Klassifizierung bezüglich des mindestens ersten Lagers bezüglich des zweiten Lagers nachgebildet wird. Dies hat den Vorteil, dass bei einem zweiten Lager bedarfsgerecht Waren bereitgestellt werden kann, auch wenn es sich hierbei um eine Neueröffnung handelt. Das Verfahren kann stets iterativ ausgeführt werden, so dass die Klassifizierungen anhand der wachsenden Datenbestände stets angepasst werden. Erfindungsgemäß kann somit in einem zweiten Lager genau die nachgefragte Produktpalette bereitgestellt werden, da bereits historische Daten aus den anderen Lagern analysiert wurden.

Gemäß einem weiteren Aspekt der vorliegenden Erfindung erfolgt das Klassifizieren pro Lager. Dies hat den Vorteil, dass spezifische Gegebenheiten eines Lagers berücksichtigt werden können. Hierbei handelt es sich beispielsweise um den Ort oder die vorliegende Käuferschicht. Folglich kann für jedes weitere Lager genau bestimmt werden, welche Produkte vorrätig zu halten sind.

Gemäß einem weiteren Aspekt der vorliegenden Erfindung beschreiben die Benutzerparameter einen zeitlichen Verlauf von Kennwerten. Dies hat den Vorteil, dass die gesammelten Daten stets zur Datenbank hinzugefügt werden und somit vergrößert sich das Wissen um nachgefragte Waren.

Gemäß einem weiteren Aspekt der vorliegenden Erfindung beschreiben die Benutzerparameter einen zeitlichen Verlauf von Kennwerten und eine Klassifizierung wird extrapoliert. Dies hat den Vorteil, dass auch Prognosen für die Zukunft erstellt werden können. So kann aus den Entwicklungen in den Daten geschlossen werden, wie sich die Gegebenheiten weiter entwickeln werden. Wird beispielsweise ein bestimmtes Produkt immer stärker nachgefragt, so ist gegebenenfalls auch davon auszugehen, dass dies in Zukunft stärker nachgefragt werden wird. Steigt die Kurve gleichbleibend an, so können weitere Stützpunkte berechnet werden und es können auch zukünftige Nachfragen vorhergesagt werden.

Gemäß einem weiteren Aspekt der vorliegenden Erfindung wird eine Ladenkennung jeweils des mindestens einen Lagers abgespeichert. Dies hat den Vorteil, dass zwischen den einzelnen Läden genau unterschieden werden kann und in den Daten genau erkennbar ist, um welchen Laden es sich handelt. Der Laden kann eine eigene Kennung bekommen, oder es kann alternativ auch eine Adresse abgespeichert werden. Da an einer bestimmten Adresse typischerweise nur ein Laden betrieben wird, kann es sich also bei dieser Adresse um die Ladenkennung handeln. Besteht eine Adresse mit mehreren Läden bzw. Lagern, so wird eine weitere Kennung vergeben.

Die Aufgabe wird auch gelöst durch eine Systemanordnung zur bedarfsgerechten Bereitstellung von physischen Waren in verteilten Lagern, aufweisend mindestens einen Sensor eingerichtet zum Erfassen von Warenidentifikationsnummern jeweils eines Konvoluts ausgehender physischer Waren in mindestens einem ersten Lager mittels einer Positionsbestimmung; einer Schnittstelleneinheit eingerichtet zum verteilten und redundanten Abspeichern der Warenidentifikationsnummern unter Verwendung eines Netzwerks aus verteilten Datenspeichern; einer weiteren Schnittstelleneinheit eingerichtet zum Auslesen der abgespeicherten Warenidentifikationsnummern und ein Auslesen von Benutzerparametern von einem Server, welche dem mindestens einen ersten Lager zugeordnet sind; einer Recheneinheit eingerichtet zum Klassifizieren der Warenidentifikationsnummern und der Benutzerparameter; und einer Bereitstellungseinheit eingerichtet zum Bereitstellen von physischen Waren anhand der Warenidentifikationsnummern in einem zweiten Lager in Abhängigkeit der Klassifizierung und ausgelesener weiterer Benutzerparameter, welche dem zweiten Lager zugeordnet sind.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ablaufdiagramm des vorgeschlagenen Verfahrens gemäß einem Aspekt der vorliegenden Erfindung;
- Figur 2:: ein schematisches Blockschaltbild des vorgeschlagenen Systems Warenidentifikation betreffend gemäß einem Aspekt der vorliegenden Erfindung;
- Figur 3:: ein schematisches Blockschaltbild zur Datenspeicherung und-erfassung gemäß einer Ausführungsform der vorliegenden Erfindung;
- Figur 4:: ein Blockdiagramm zur Datenspeicherung und -erfassung gemäß einem Aspekt der vorliegenden Erfindung; und
- Figur 5:: ein schematisches Ablaufdiagramm zur Bereitstellung physischer Waren gemäß einer Ausführungsform der vorliegenden Erfindung.

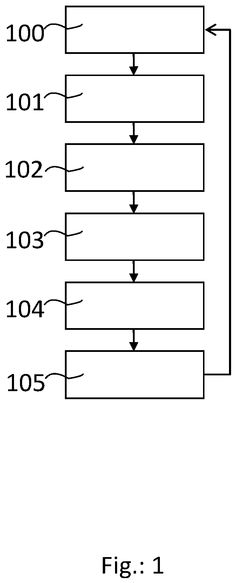

Figur 1 zeigt ein Verfahren zum bedarfsgerechten Bereitstellen von physischen Waren in verteilten Lagern, aufweisend ein Erfassen 100 von Warenidentifikationsnummern jeweils eines Konvoluts ausgehender physischer Waren in mindestens einem ersten Lager mittels einer Positionsbestimmung; ein verteiltes und redundantes Abspeichern 101 der Warenidentifikationsnummern unter Verwendung eines Netzwerks aus verteilten Datenspeichern; ein Auslesen 102 der abgespeicherten Warenidentifikationsnummern und ein Auslesen 103 von Benutzerparametern von einem Server, welche dem mindestens einen ersten Lager zugeordnet sind; ein Klassifizieren 104 der Warenidentifikationsnummern und der Benutzerparameter; und ein Bereitstellen 105 von physischen Waren anhand der Warenidentifikationsnummern in einem zweiten Lager in Abhängigkeit der Klassifizierung und ausgelesener weiterer Benutzerparameter, welche dem zweiten Lager zugeordnet sind.

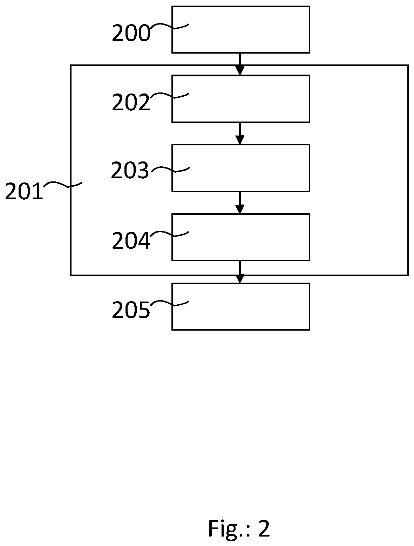

Figur 2 zeigt ein schematisches Blockschaltbild zur Erfassung und Identifikation von Warenidentifikationsnummern mittels Sensorik. Das Konvolut physischer Ware 200 durchläuft anschließend das System des Erfassens von Warenidentifikationsnummern 201, beginnend durch Sensorikerfassung 202 beim Verlassen des ersten Lagers. Die Produkte werden danach identifiziert 203 und die zugehörigen Warenidentifikationsnummern 204 dem System bereitgestellt und anschließend in Datenspeichern 205 erfasst.

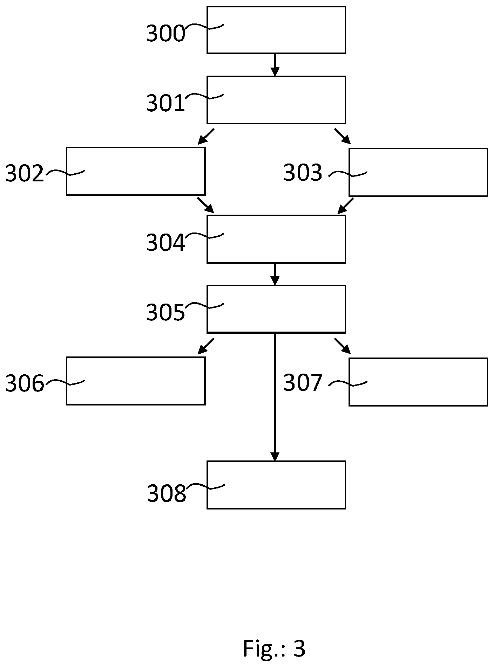

Figur 3 zeigt ein Blockdiagramm zur Datenspeicherung und -verarbeitung. Die erfassten Daten 300 werden segmentiert 301 und auf dezentralen Speicherplätzen 302, 303 abgelegt. Zur Bestimmung der Handlungsempfehlung werden die getrennten Datensätze zusammengeführt 304 und ein Output 305 generiert. Nach Generierung des Outputs, werden die Datensätze erneut getrennt und die Datenteilsätze auf verschiedenen Datenspeichern 306, 307 abgelegt; eine Handlungsempfehlung 308 wird am Ende dem Nutzer mitgeteilt.

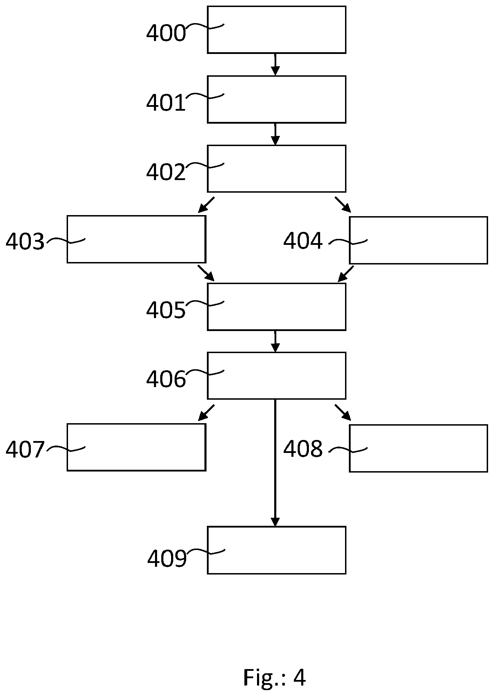

Figur 4 zeigt ein Blockdiagramm zur Datenspeicherung und -verarbeitung unter Einbeziehung verketteter Blöcke. Die erfassten Daten 400 werden durch eine Blockchain 401 in verkettete Blöcke übersetzt und anschließend segmentiert 402 und auf dezentralen Speicherplätzen 403, 404 abgelegt. Zur Bestimmung der Handlungsempfehlung, werden die getrennten Datensätze zusammengeführt 405 und ein Output 406 generiert. Nach Generierung des Outputs, werden die Datensätze erneut getrennt und die Datenteilsätze auf verschiedenen Datenspeichern 407, 408 abgelegt; eine Handlungsempfehlung 409 wird am Ende dem Nutzer mitgeteilt.

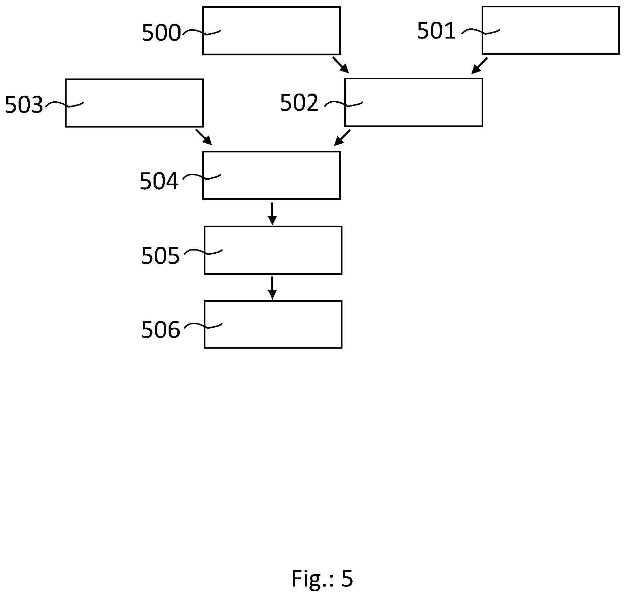

Figur 5 zeigt ein schematisches Ablaufdiagramm zur Bereitstellung physischer Waren in einem zweiten Lager. Die Klassifizierungen der Benutzerparameter 500 aus dem ersten Lager und die Klassifizierungen der erhobenen Daten der Benutzerparameter 501 in der Umgebung des zweiten Lagers, werden auf übereinstimmende Benutzerparameter in einer Datenbank 502 abgeglichen. Die Klassifizierungen der Warenidentifikationsnummern 503 der physischen Waren aus dem ersten Lager, werden mit den Übereinstimmungen des Datenabgleichs 502 in der Datenbank 504 verbunden. Eine Recheneinheit 505 ermittelt aus der Datenbank 504 die im zweiten Lager benötigten Warenidentifikationsnummern. Eine Bereitstellungseinheit 506 stellt daraufhin die physischen Waren für das zweite Lager bereit.

Im Folgenden werden einige optionale Schritte bzgl. einiger Aspekte der Erfindung vorgeschlagen:

### Scans

### 1. Schritt: Dateninput

Vom stationären Händler durch Scans ermittelte Daten zu jedem Kauf, d.h. Warenkorb, Zeitpunkt und Ort, werden in Echtzeit durch kabellosen Datentransfer an einen Daten-Hub übermittelt.

### 2. Schritt: Datenschutz

Im Daten-Hub werden die Daten in einen verketteten Block übersetzt und anschließend wird dieser Block in Teilblöcke aufgeteilt. Diese Teilblöcke werden darauffolgend dezentral auf verschiedenen Servern gelagert.

### 3. Schritt: Datenverarbeitung

Nur für den Schritt der Datenverarbeitung werden die Teilblöcke - im Rahmen der Datenabfrage - zu einem Block zusammengeführt und die Daten durch entsprechende Datenschichten bedarfsgerecht verarbeitet, nach der Abfrage wieder in Teilblöcke getrennt und erneut dezentral auf verschiedenen Servern gelagert.

### 4. Schritt: Datenoutput

Die Datenverarbeitung ist mit dem Datenoutput und den daraus ermittelten Handlungsempfehlungen abgeschlossen. Nur die Handlungsempfehlung wird dem Nutzer unverschlüsselt angezeigt, ein Rückschluss auf die Initialdaten ist nicht möglich.

### Mobile Endgeräte

### 1. Schritt: Datenquelle

Über mobile Endgeräte werden stationäre Kaufvorgänge mit dem entsprechenden Käufer verbunden. Dies funktioniert durch eine 3-D-Positionierung der Person in Innenräumen und der Verbindung der Position der Person zum Bezahlterminal. Wird die Position der Person direkt am Bezahlterminal ermittelt, wird der Einkauf, d.h. die erworbenen Produkte, mit der Person und ihren freiwillig im mobilen Endgerät hinterlegten Daten verknüpft.

### 2. Schritt: Dateninput

Personendaten, Warenkorb und Standort werden anschließend in Echtzeit verschlüsselt an einen drahtlosen Daten-Hub übermittelt.

### 3. Schritt: Datenschutz

Im Daten-Hub werden die Daten in einen verketteten Block übersetzt und anschließend wird dieser Block in Teilblöcke aufgeteilt. Diese Teilblöcke werden darauffolgend dezentral auf verschiedenen Servern gelagert.

### 4. Schritt: Datenverarbeitung

Nur für den Schritt der Datenverarbeitung werden die Teilblöcke - im Rahmen der Datenabfrage - zu einem Block zusammengeführt und die Daten durch entsprechende Datenschichten bedarfsgerecht verarbeitet, nach der Abfrage wieder in Teilblöcke getrennt und erneut dezentral auf verschiedenen Servern gelagert.

### 5. Schritt: Datenoutput

Die Datenverarbeitung ist mit dem Datenoutput und den daraus ermittelten Handlungsempfehlungen abgeschlossen. Nur die Handlungsempfehlung wird dem Nutzer unverschlüsselt angezeigt, ein Rückschluss auf die Initialdaten ist nicht möglich.

Vorliegend nicht gezeigt ist ein Datenspeicher oder ein computerlesbares Medium mit einem Computerprogrammprodukt aufweisend Steuerbefehle, welche das vorgeschlagene Verfahren implementieren bzw. die vorgeschlagene Systemanordnung betreiben.

## Patentansprüche

1. Automatisiertes Verfahren zum bedarfsgerechten Bereitstellen von physischen Waren in verteilten Lagern, aufweisend:
- ein Erfassen (100) von Warenidentifikationsnummern jeweils eines Konvoluts ausgehender physischer Waren in mindestens einem ersten Lager mittels einer Positionsbestimmung;
- ein verteiltes und redundantes Abspeichern (101) der Warenidentifikationsnummern unter Verwendung eines Netzwerks aus verteilten Datenspeichern;
- ein Auslesen (102) der abgespeicherten Warenidentifikationsnummern und ein Auslesen (103) von Benutzerparametern von einem Server, welche dem mindestens einen ersten Lager zugeordnet sind;
- ein Klassifizieren (104) der Warenidentifikationsnummern und der Benutzerparameter; und
- ein Bereitstellen (105) von physischen Waren anhand der Warenidentifikationsnummern in einem zweiten Lager in Abhängigkeit der Klassifizierung und ausgelesener weiterer Benutzerparameter, welche dem zweiten Lager zugeordnet sind.

2. Verfahren nach Anspruch 1, **dadurch gekennzeichnet, dass** die Positionsbestimmung unter Verwendung einer Signalstärke, eines bildverarbeitenden Verfahrens und/ oder eines Positionssensors durchgeführt wird.

3. Verfahren nach Anspruch 1 oder 2, **dadurch gekennzeichnet, dass** die Warenidentifikationsnummern unter Verwendung einer Luftschnittstelle ausgelesen werden.

4. Verfahren nach einem der vorhergehenden Ansprüche, **dadurch gekennzeichnet, dass** das verteilte und redundante Abspeichern derart durchgeführt wird, dass randomisiert Datensegmente erzeugt werden.

5. Verfahren nach einem der vorhergehenden Ansprüche, **dadurch gekennzeichnet, dass** die Benutzerparameter verschlüsselte personenbezogene Daten und/ oder ortsbezogene Daten aufweisen.

6. Verfahren nach einem der vorhergehenden Ansprüche, **dadurch gekennzeichnet, dass** das Klassifizieren ein Verwenden einer Clusteranalyse, einer Variablenauswahl, einer Proximitätsbestimmung, einer Gewichtung, einer Varianzbestimmung und/ oder eines Cluster-Verfahrens durchgeführt wird.

7. Verfahren nach einem der vorhergehenden Ansprüche, **dadurch gekennzeichnet, dass** mindestens ein Warenparameter bereitgestellt wird, der bei dem Klassifizieren berücksichtigt wird.

8. Verfahren nach einem der vorhergehenden Ansprüche, **dadurch gekennzeichnet, dass** die bereitgestellten physischen Waren derart ausgewählt werden, dass die Klassifizierung bezüglich des mindestens ersten Lagers bezüglich des zweiten Lagers nachgebildet wird.

9. Verfahren nach einem der vorhergehenden Ansprüche, **dadurch gekennzeichnet, dass** das Klassifizieren pro Lager erfolgt.

10. Verfahren nach einem der vorhergehenden Ansprüche, **dadurch gekennzeichnet, dass** die Benutzerparameter einen zeitlichen Verlauf von Kennwerten beschreiben.

11. Verfahren nach einem der vorhergehenden Ansprüche, **dadurch gekennzeichnet, dass** die Benutzerparameter einen zeitlichen Verlauf von Kennwerten beschreiben und eine Klassifizierung extrapoliert wird.

12. Verfahren nach einem der vorhergehenden Ansprüche, **dadurch gekennzeichnet, dass** eine Lagerkennung jeweils des mindestens einen Lagers abgespeichert wird.

13. Systemanordnung zur bedarfsgerechten Bereitstellung von physischen Waren in verteilten Lagern, aufweisend:
- mindestens einen Sensor eingerichtet zum Erfassen (100) von Warenidentifikationsnummern jeweils eines Konvoluts ausgehender physischer Waren in mindestens einem ersten Lager mittels einer Positionsbestimmung;
- einer Schnittstelleneinheit eingerichtet zum verteilten und redundanten Abspeichern (101) der Warenidentifikationsnummern unter Verwendung eines Netzwerks aus verteilten Datenspeichern;
- einer weiteren Schnittstelleneinheit eingerichtet zum Auslesen (102) der abgespeicherten Warenidentifikationsnummern und ein Auslesen (103) von Benutzerparametern von einem Server, welche dem mindestens einen ersten Lager zugeordnet sind;
- einer Recheneinheit eingerichtet zum Klassifizieren (104) der Warenidentifikationsnummern und der Benutzerparameter; und
- einer Bereitstellungseinheit eingerichtet zum Bereitstellen (105) von physischen Waren anhand der Warenidentifikationsnummern in einem zweiten Lager in Abhängigkeit der Klassifizierung und ausgelesener weiterer Benutzerparameter, welche dem zweiten Lager zugeordnet sind.

14. Computerprogrammprodukt, umfassend Befehle, die bei der Ausführung des Programms durch einen Computer diesen veranlassen, die Schritte des Verfahrens nach einem der Ansprüche 1 bis 12 auszuführen.

15. Computerlesbares Speichermedium, umfassend Befehle, die bei der Ausführung durch einen Computer diesen veranlassen, die Schritte des Verfahrens nach einem der Ansprüche 1 bis 12 auszuführen.
